# FASCICULE DE BREVET EUROPEEN

(11) **EP 3 240 729 B1**
(45) Date de publication et mention de la délivrance du brevet: **15.07.2020**
(21) Numéro de dépôt: 15823366.8
(22) Date de dépôt: 22.12.2015
(51) Int. Cl.: B64F 5/00

(54) **OUTILLAGE DE SUPPORT D'UNE NACELLE DE MOTEUR D'AÉRONEF**
HALTER FÜR TRIEBWERKSVERKLEIDUNG
ENGINE NACELLE SUPPORT DEVICE

(30) Priorité: 29.12.2014 FR 1463396
(43) Date de publication de la demande: 08.11.2017
(73) Titulaire: Safran Nacelles, 76700 Gonfreville-l'Orcher (FR)
(72) Inventeur: DRIEU, Thierry, 32270 Ansan (FR); CHANTAL, Patrice, 32600 Pujaudran (FR); DAMOUR, Anthony, 31400 Toulouse (FR); LABAZEE, Stéphane, 32600 Beaupuy (FR)
(74) Mandataire: Delorme, Nicolas
(86) Numéro de dépôt international: PCT/FR2015/053729
(87) Numéro de publication internationale: WO 2016/108015

(56) Documents cités:
- BE-A- 560 669
- FR-A1- 2 848 200
- FR-A1- 2 992 292
- JP-A- 2002 193 195

## Description

La présente invention se rapporte à un ensemble de manutention d'une nacelle de moteur d'aéronef, tel qu'un turboréacteur.

L'état de l'art est illustré par le document JP-A-2002193195.

Un aéronef est mû par un ou plusieurs ensembles propulsifs, comprenant chacun un turboréacteur logé dans une nacelle.

Les nacelles modernes sont destinées à abriter un turboréacteur double flux, apte à générer un flux de gaz chauds (également appelé flux primaire), issu de la chambre de combustion du turboréacteur, et un flux d'air froid (également appelé flux secondaire), généré par les pales de la soufflante du turboréacteur et circulant à l'extérieur du turboréacteur à travers un passage annulaire (également appelé veine) formé entre un carénage du turboréacteur (ou une structure interne la nacelle entourant le turboréacteur) et une paroi interne de la nacelle. Les flux primaire et secondaire sont éjectés du turboréacteur par l'arrière de la nacelle.

Une nacelle présente une structure tubulaire comprenant usuellement une entrée d'air en avant du turboréacteur, une section médiane destinée à entourer la soufflante du turboréacteur, et une section arrière, la section arrière abritant généralement des moyens d'inversion de poussée et étant destinée à entourer la chambre de combustion du turboréacteur. En outre, la nacelle est généralement terminée par une tuyère d'éjection dont la sortie est située en aval du turboréacteur.

La section arrière de la nacelle est usuellement formée d'une première et d'une deuxième demi-coquilles de forme sensiblement hémicylindrique, disposées de part et d'autre d'un plan vertical longitudinal de symétrie de la nacelle. Les sections médiane et arrière sont, de manière classique, reliées l'une à l'autre par un cadre, les première et seconde demi-coquilles étant généralement équipées de moyens de positionnement coopérant en position de travail avec des moyens de positionnement complémentaires ménagés sur le cadre.

Compte tenu de la taille, du poids et de la relative fragilité des éléments constituant une nacelle, les opérations de finition, d'assemblage final et de manutention sont complexes, consommatrices de temps et nécessitent des équipements coûteux.

Les opérations de finition comprennent notamment les opérations de peinture, qui sont cruciales pour la qualité finale de l'aspect extérieur. Pour autant ces opérations ne semblent actuellement pas optimisées en termes de qualité et de rapidité d'exécution.

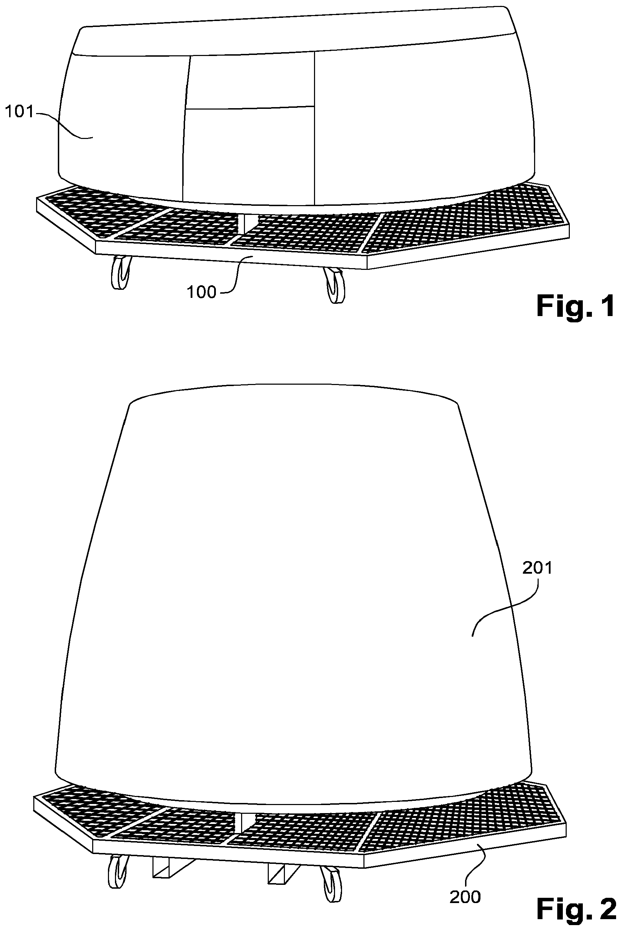

De manière conventionnelle, les opérations de peinture d'une nacelle sont effectués au moyen de chariots de support dédiés aux différents sous-ensembles d'une nacelle, à savoir l'entrée d'air, les deux demi-parties formant la section médiane et les deux demi-parties formant la section arrière. Chacun de ces éléments est ainsi fixé sur un chariot de support correspondant pour être peint par un opérateur. Des exemples de ces dispositifs connus sont représentés aux figures 1 et 2. La figure 1 montre un outillage de peinture 100 pour une entrée d'air 101 de nacelle. La figure 2 montre un outillage de peinture 200 pour une demi-section arrière 201 de nacelle.

Ce procédé conventionnel présente plusieurs inconvénients. En premier lieu, il nécessite un nombre important d'équipements spécifiques, dont pas moins de cinq chariots de support différents pour une seule nacelle. En outre, pour les éléments les plus volumineux, les opérateurs sont contraints, pour accéder à toutes les zones à peindre, d'utiliser des plateformes de différentes hauteurs, ce qui implique pour les opérateurs une ergonomie très dégradée.

Différentes opérations subséquentes aux opérations de peinture sont également impactées par une ergonomie et une efficacité mauvaises.

En effet, une fois les opérations de peinture terminées, la nacelle doit être équipée et montée sur un moteur, dit « moteur esclave », afin d'effectuer les derniers contrôle de qualité (incluant notamment un contrôle dimensionnel). Cela implique donc de devoir manutentionner chacun des sous-ensembles de la nacelle afin de les monter sur le moteur esclave, avec les risques et les difficultés que cela comporte. Ensuite, la nacelle est présentée au client montée sur le moteur esclave, afin que le client puisse effectuer les contrôles et décider d'accepter ou non la livraison de cette nacelle. Enfin, la nacelle est démontée et les sous-ensembles sont installés sur des chariots de transport spécifique pour être livrés chez le client. Des opérations de manutention sont donc effectuées à plusieurs reprises.

A chaque étape de ce processus, la manutention des éléments constituant la nacelle est une opération critique car les nacelles sont des pièces très lourdes et de dimensions très importantes, mais relativement fragiles. D'une manière générale, les précautions nécessaires à la manutention des éléments d'une nacelle sont consommatrices de temps et génératrices de risques.

Au vu de ce qui précède, il existe donc un besoin d'améliorer à la fois les opérations de peinture d'une nacelle, les opérations de contrôle qualitatif de la nacelle ainsi que les opérations de transport de la nacelle.

La présente invention se propose de répondre à ces contraintes à l'aide d'un outillage unique.

A cet effet, l'invention concerne un outillage de support d'une nacelle d'un turboréacteur d'aéronef, comportant :
- un châssis ;
- une structure de support s'élevant du châssis ;
- une structure d'accrochage d'une nacelle, montée rotative sur la structure de support et mobile en rotation autour d'un axe sensiblement horizontal et sensiblement confondu avec l'axe longitudinal de la nacelle lorsque celle-ci est assemblée sur l'outillage, la structure d'accrochage comportant un dispositif pour la fixation d'une entrée d'air d'une nacelle, un dispositif pour la fixation d'une section médiane d'une nacelle et un dispositif pour la fixation d'une section arrière d'une nacelle.

Ainsi, en prévoyant un outillage unique permettant de fixer l'intégralité des éléments d'une nacelle, dans leur position de fonctionnement normale, la nacelle entière peut être peinte en une seule opération de peinture, ce qui représente un grand gain de temps et de qualité, en particulier pour la peinture de logos de type dit traversant. De plus, grâce au caractère rotatif de l'outillage, toutes les parties de la nacelle peuvent être atteintes facilement par un opérateur au sol. En outre, chaque élément de la nacelle étant fixé à l'outillage de la même manière qu'il serait, en condition réelle, fixé à un turboréacteur, l'outillage permet de réaliser toutes les opérations d'assemblage final et de finitions de la nacelle sur le moteur, comme par exemple le contrôle qualitatif. Enfin, le déplacement de la nacelle ainsi montée peut être assuré directement, sans avoir à procéder à des opérations de manutention supplémentaires.

Dans une réalisation, la structure d'accrochage est configurée pour permettre la fixation sur l'outillage de l'ensemble des éléments constitutifs d'une nacelle, de manière analogue à la fixation normale de ces éléments sur un aéronef.

Dans une réalisation, l'outillage comporte un premier tronçon, destiné à porter la section arrière d'une nacelle, et un deuxième tronçon, destiné à porter la section médiane et l'entrée d'air d'une nacelle, le deuxième tronçon étant mobile en translation par rapport au premier tronçon, selon une direction parallèle à l'axe de rotation de la structure d'accrochage.

Dans une réalisation, le châssis est équipé de dispositifs permettant son déplacement, tels que des roulettes escamotables ou des coussins d'air.

Dans une réalisation, l'outillage comporte un dispositif d'entrainement en rotation de la structure d'accrochage, tel qu'un moteur électrique.

Dans une réalisation, l'outillage comporte un dispositif, notamment un dispositif électrique, permettant de faire varier la hauteur de la structure d'accrochage.

L'invention concerne également un ensemble d'une nacelle et d'un outillage tel que défini ci-dessus.

Dans une réalisation, la nacelle comporte une section avant, une section médiane et une section arrière.

L'invention sera mieux comprise à la lecture de la description détaillée qui suit, faite en relation avec les dessins annexés, parmi lesquels :
- les figures 1 et 2 représentent des outillages connus ;
- les figures 3a et 3b représentent des vues d'un outillage conforme à l'invention, sur lequel est assemblée une nacelle de turboréacteur ;
- les figures 4a et 4b représentent des vues d'un outillage conforme à l'invention ;
- les figures 5a et 5b représentent une variante de réalisation de la structure d'accrochage de la nacelle ;
- les figures 6a et 6b représentent une variante de l'outillage de la figure 3a.

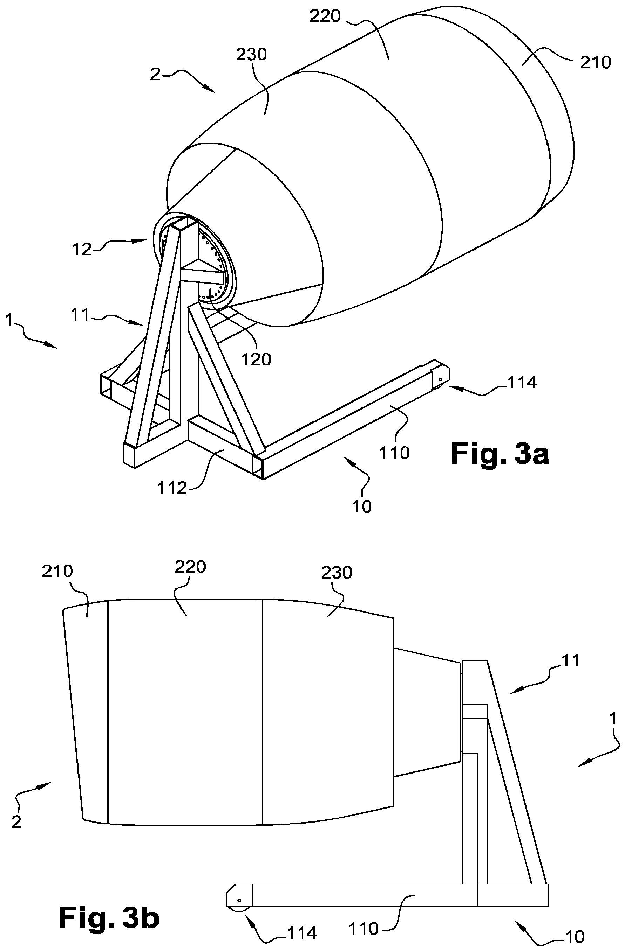

Les figures 3a et 3b représentent un exemple de réalisation d'un outillage 1 conforme à l'invention, cet outillage permettant de supporter l'intégralité d'une nacelle 2 de turboréacteur. Dans l'exemple des figures 3a et 3b, la nacelle 2 est une nacelle de turboréacteur double flux. Dans l'exemple, la nacelle 2 comprend globalement trois sous-ensembles :
- une section avant 210, ou entrée d'air ;
- une section médiante 220 ;
- une section arrière 230.

Conformément à l'invention, l'outillage 1 est conformé de manière à permettre la fixation de chacun des ces trois sous-ensembles sur l'outillage 1, de manière identique à leur fixation sur un aéronef en conditions normales de fonctionnement, c'est-à-dire de manière identique à leur fixation normale sur le turboréacteur et/ou sur le mât moteur d'un aéronef.

L'outillage 1 comporte un châssis 10 horizontal qui supporte une structure verticale 11. La structure verticale 11 porte à son extrémité supérieure une structure d'accrochage 12 d'une nacelle 2 de turboréacteur. Dans l'exemple, le châssis 10 présente une forme générale en U, allongée selon une direction longitudinale. Le châssis 10 comporte dans l'exemple deux bras longitudinaux 110 et une traverse 112. Afin de faciliter son déplacement, le châssis 10 peut comporter des dispositifs tels que des roulettes escamotables 114.

Conformément à l'invention, la structure d'accrochage 12 est montée pivotante sur la structure verticale 11, autour d'un axe de rotation sensiblement horizontal, et sensiblement confondu avec l'axe longitudinal de la nacelle 2 lorsque celle-ci est assemblée sur l'outillage 1. L'outillage 1 comporte un dispositif d'entrainement 120 en rotation de la structure d'accrochage 12, comprenant par exemple un moteur électrique. Ainsi, il est possible de commander la rotation de la structure d'accrochage 12, et donc de la nacelle 2 qu'elle supporte. Les opérations de finition de la nacelle, en particulier les opérations de peinture, sont grandement facilitées puisqu'un opérateur au sol peut accéder à l'ensemble de la nacelle, quelles que soient les dimensions de celle-ci. De même, les opérations de contrôle qualité sont simplifiées puisqu'elles peuvent être réalisées par un opérateur au sol.

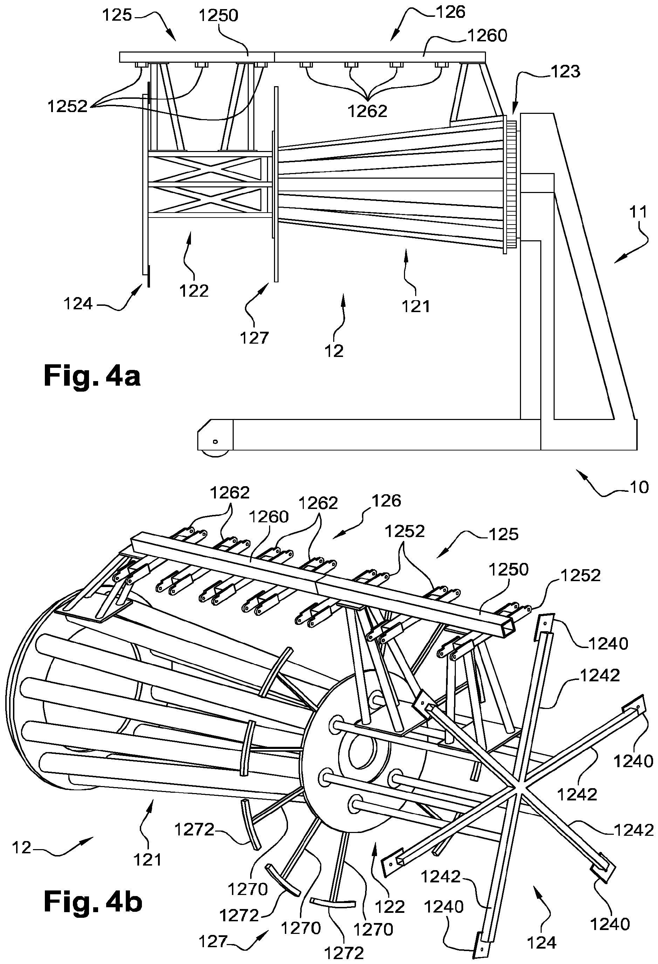

La figure 4a montre un outillage conforme à l'invention, sans nacelle assemblée sur la structure d'accrochage. La structure d'accrochage comprend deux tronçons principaux, un tronçon arrière 121 et un tronçon avant 122. Le tronçon arrière 121 est solidaire de la structure verticale 11 par l'intermédiaire d'une liaison pivot. Dans l'exemple des figures 4a et 4b, le tronçon arrière porte à son extrémité arrière une couronne dentée 123 permettant l'entrainement en rotation de la structure d'accrochage 12. Les tronçons avant 122 et arrière 121 portent l'ensemble des dispositifs servant à la fixation d'une nacelle sur l'outillage 1. Ces dispositifs de fixation incluent un support de fixation d'entrée d'air 124, un support de fixation de section médiane 125, et deux supports de fixation de section arrière 126, 127. L'ensemble des dispositifs de fixation des différentes parties correspondent aux différents points de fixation prévus sur le turboréacteur et/ou le mât moteur correspondant à la nacelle. Ainsi, les dispositifs de fixation 124, 125, 126, 127 sont configurés de telle sorte que la nacelle 2 est fixée sur l'outillage 1 exactement de la même manière que sur un aéronef en condition de fonctionnement. En particulier, toutes les manipulations et les mouvements de parties de la nacelle qui sont possibles en conditions réelles peuvent être reproduits lorsque la nacelle est montée sur l'outillage. Cela inclut notamment le déplacement et/ou l'ouverture des différents capots de la nacelle en position de maintenance, ou encore l'ouverture, le cas échéant, des inverseurs de poussée.

La figure 4b représente la structure d'accrochage 12 de l'outillage de la figure 4a et montre plus en détail les dispositifs de fixation 124, 125, 126, 127.

Le support de fixation d'entrée d'air 124 forme un support pour la fixation de la bride d'entrée d'air de la nacelle 2, cette bride étant située dans la section avant 210 de la nacelle 2. Le support de fixation d'entrée d'air 124 comporte à cet effet des platines de fixation 1240, dans l'exemple six platines de fixation 1240 qui sont disposées chacune à l'extrémité d'un bras 1242.

Le support de fixation de section médiane 125 comporte une poutre 1250 sur laquelle sont fixés trois dispositifs d'attache 1252 permettant la fixation, par l'intermédiaire de charnières, des éléments formant la section médiane 220 de la nacelle 2.

Le premier support de fixation de section arrière 126 comporte une poutre 1260 sur laquelle sont fixés quatre dispositifs d'attache 1262 permettant la fixation, par l'intermédiaire de charnières, des éléments formant la section arrière 230 de la nacelle 2. Le deuxième support de fixation de section arrière 127 est formé par une structure en étoile comportant des branches 1270 et des extrémités périphériques 1272. Les extrémités périphériques 1272 reproduisent partiellement la gorge du système de bridage de type couteau / gorge (également dénommé « V-blade / V-groove »).

L'exemple de réalisation des figures 4a et 4b montre une structure d'accrochage 12 comportant des tronçons avant 122 et arrière 121 constitués principalement par un assemblage de poutres tubulaires.

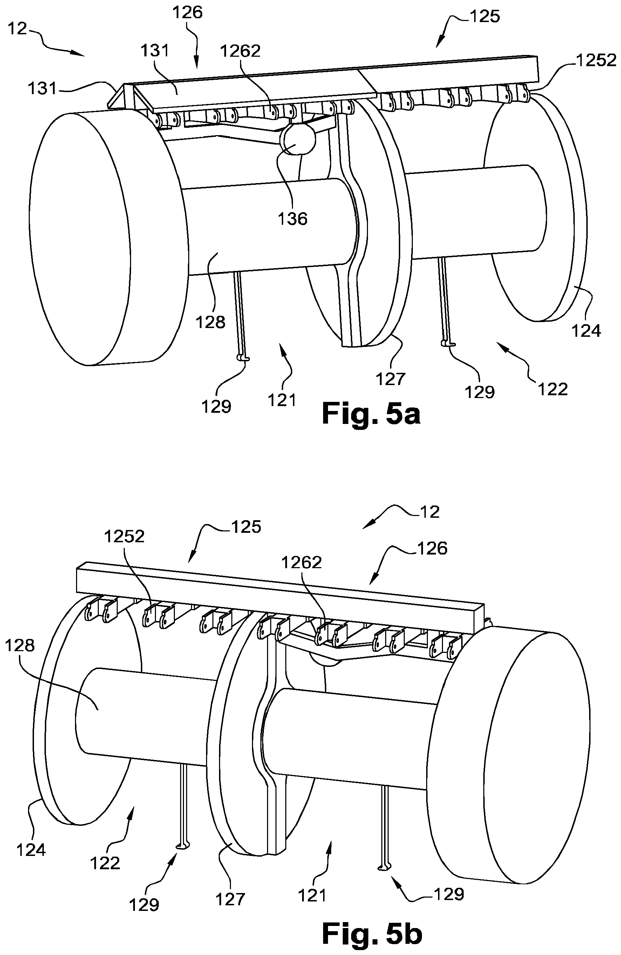

L'exemple de réalisation montré aux figures 5a et 5b montre que la structure d'accrochage peut être réalisée de différentes manières, tant que les différents points d'accrochages de la nacelle sont présents et correctement positionnés. Dans cet exemple, on voit que les tronçons avant 122 et arrière 121 forment une structure tubulaire 128 unique. Cette structure tubulaire 128 porte les différents dispositifs de fixation 124, 125, 126, 127.

Dans l'exemple de réalisation des figures 5a et 5b, on a en outre représenté des éléments supplémentaires, qui sont bien entendu compatibles avec tous les modes de réalisation de la présente invention. Ces éléments sont des systèmes de drainage 129 (également dénommés « drain masts »), un ou plusieurs dispositifs d'amortissement et d'arrêt 130 (également dénommés « bumpers »). En outre, la figure 5a montre que le tronçon arrière 121 est pourvu à son extrémité haute de panneaux 131 correspondant à des trappes d'accès d'une nacelle dénommées « hinge access panels ». Ces panneaux 131 sont démontables et peuvent équiper également le tronçon avant 122.

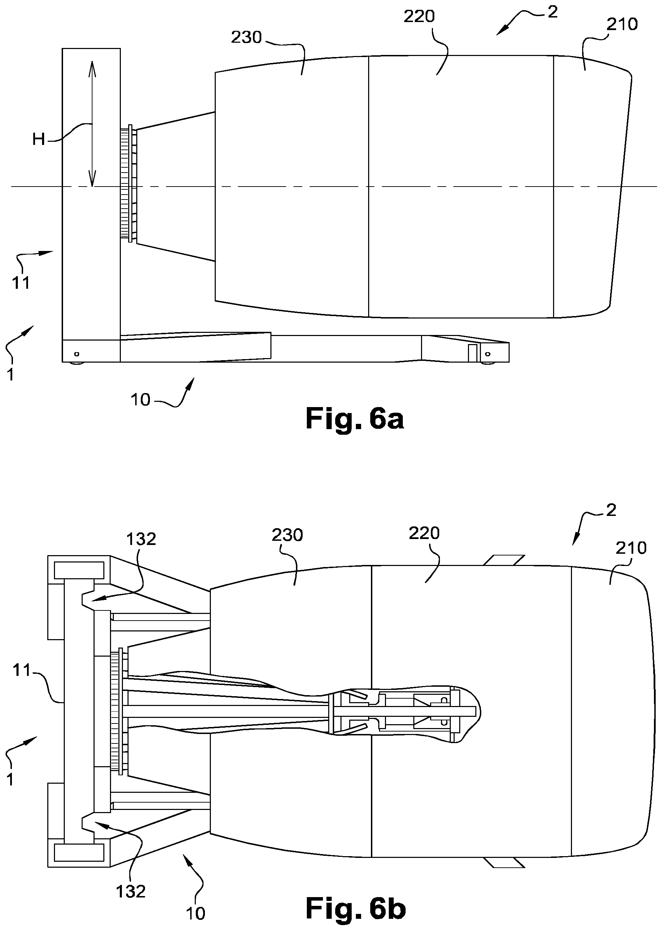

Les figures 6a et 6b montrent une variante de l'outillage de la figure 3a, comportant un dispositif permettant de faire varier la hauteur de la structure d'accrochage 12 par rapport au châssis (voir flèche H sur la figure 6a), notamment afin de faciliter le travail des opérateurs lors des différentes opérations de peinture ou de contrôle qualité. En outre, la structure de support 12 comporte des dégagements 132 afin de permettre le passage des extrémités des carénages dits en queue de castor (également dénommés « beavertails ») lors de la rotation de la nacelle, dans le cas où l'un des capots d'inverseur de poussée est en position reculée, comme montré sur la figure 6b.

Dans tous les modes de réalisation, on pourra prévoir que le tronçon avant 122 peut coulisser (vers l'avant) par rapport au tronçon arrière 121. Cette disposition permet de libérer l'espace nécessaire au démontage (ou inversement le montage) de la section arrière 230 de la nacelle 2 sans avoir à démonter préalablement la section médiane 220.

Par ailleurs, le châssis est conformé de manière à procurer la stabilité nécessaire à l'outillage, en tenant compte de la masse totale d'une nacelle. En outre, le châssis, et notamment la largeur de celui-ci, sera avantageusement prévu pour que l'outillage puisse porter une demi-nacelle tout en présentant une stabilité latérale suffisante.

Bien que l'invention ait été décrite en relation avec un exemple particulier de réalisation, il est bien évident qu'elle n'y est nullement limitée et qu'elle comprend tous les équivalents techniques des moyens décrits ainsi que leurs combinaisons si celles-ci entrent dans le cadre de l'invention qui est défini par le texte des revendications.

## Revendications

1. Outillage (1) de support d'une nacelle (2) d'un turboréacteur d'aéronef, comportant :
- un châssis (10) ;
- une structure de support (11) s'élevant du châssis ;
- une structure d'accrochage (12) d'une nacelle, montée rotative sur la structure de support (11) et mobile en rotation autour d'un axe sensiblement horizontal et sensiblement confondu avec l'axe longitudinal de la nacelle (2) lorsque celle-ci est assemblée sur l'outillage, la structure d'accrochage (12) comportant un dispositif (124) pour la fixation d'une d'entrée d'air d'une nacelle, un dispositif (125) pour la fixation d'une section médiane d'une nacelle et un dispositif (126) pour la fixation d'une section arrière d'une nacelle.

2. Outillage (1) selon la revendication 1, dans lequel la structure d'accrochage est configurée pour permettre la fixation sur l'outillage (1) de l'ensemble des éléments constitutifs d'une nacelle, de manière analogue à la fixation normale de ces éléments sur un aéronef.

3. Outillage (1) selon l'une des revendications précédentes, comportant un premier tronçon (121), destiné à porter la section arrière d'une nacelle et un deuxième tronçon (122), destiné à porter la section médiane et l'entrée d'air d'une nacelle, le deuxième tronçon (122) étant mobile en translation par rapport au premier tronçon (131), selon une direction parallèle à l'axe de rotation de la structure d'accrochage (12).

4. Outillage (1) selon l'une des revendications précédentes, dans lequel le châssis est équipé de dispositifs (114) permettant son déplacement, tels que des roulettes escamotables ou des coussins d'air.

5. Outillage (1) selon l'une des revendications précédentes, comportant un dispositif d'entrainement en rotation de la structure d'accrochage (12), tel qu'un moteur électrique.

6. Outillage (1) selon l'une des revendications précédentes, comportant un dispositif, notamment un dispositif électrique, permettant de faire varier la hauteur de la structure d'accrochage (12).

7. Ensemble d'une nacelle (2) et d'un outillage (1) selon l'une des revendications précédentes.

8. Ensemble selon la revendication précédente, dans laquelle la nacelle (2) comporte une section avant (210), une section médiane (220) et une section arrière (230).

## Patentansprüche

1. Werkzeug (1) zum Halten einer Verkleidung (2) eines Turbostrahltriebwerks eines Luftfahrzeugs, Folgendes umfassend:
- eine Einfassung (10);
- eine Haltestruktur (11), sich von der Einfassung erhebend;
- eine Ankopplungsstruktur (12) einer Verkleidung, drehbar auf der Haltestruktur (11) montiert und drehbar beweglich um eine im Wesentlichen horizontale und im Wesentlichen in die Längsachse der Verkleidung (2) übergehende Achse, wenn diese auf dem Werkzeug angebracht ist,
wobei die Ankopplungsstruktur (12) eine Vorrichtung (124) für die Befestigung eines Lufteinlasses einer Verkleidung, eine Vorrichtung (125) für die Befestigung eines mittleren Bereichs einer Verkleidung und eine Vorrichtung (126) für die Befestigung eines hinteren Bereichs einer Verkleidung umfasst.

2. Werkzeug (1) nach Anspruch 1, in welchem die Ankopplungsstruktur konfiguriert ist, um die Befestigung auf dem Werkzeug (1) der Einheit der konstitutiven Elemente einer Verkleidung zu erlauben, auf analoge Weise zu der normalen Befestigung dieser Elemente an einem Luftfahrzeug.

3. Werkzeug (1) nach einem der vorhergehenden Ansprüche, umfassend einen ersten Abschnitt (121), dafür bestimmt, den hinteren Bereich einer Verkleidung zu halten, und einen zweiten Abschnitt (122), dafür bestimmt, den mittleren Bereich und den Lufteinlass einer Verkleidung zu halten, wobei der zweite Abschnitt (122) in Bezug auf den ersten Abschnitt (131) verschiebbar beweglich ist gemäß einer Richtung parallel zu der Rotationsachse der Ankopplungsstruktur (12).

4. Werkzeug (1) nach einem der vorhergehenden Ansprüche, in welchem die Einfassung mit einer ihre Deplatzierung erlaubenden Vorrichtungen (114) wie versenkbaren Rollen oder Luftkissen ausgestattet ist.

5. Werkzeug (1) nach einem der vorhergehenden Ansprüche, umfassend eine Vorrichtung zum rotierenden Antreiben der Ankopplungsstruktur (12) wie einen elektrischen Motor.

6. Werkzeug (1) nach einem der vorhergehenden Ansprüche, eine Vorrichtung umfassend, insbesondere eine elektrische Vorrichtung, es erlaubend, die Höhe der Ankopplungsstruktur (12) variieren zu lassen.

7. Einheit einer Verkleidung (2) und eines Werkzeugs (1) nach einem der vorhergehenden Ansprüche.

8. Einheit nach dem vorhergehenden Anspruch, in welcher die Verkleidung (2) einen vorderen Abschnitt (210), einen mittleren Abschnitt (220) und einen hinteren Abschnitt (230) umfasst.

## Claims

1. A tooling (1) for supporting a nacelle of an aircraft turbojet engine, including:
- a chassis (10);
- a support structure (11) rising from the chassis;
- an hooking structure (12) of a nacelle, rotatably mounted on the support structure (11) and movable in rotation about an axis substantially horizontal and substantially coincident with the longitudinal axis of the nacelle (2) when it is assembled on the tooling, the hooking structure (12) comprising a device (124) for fastening an air inlet of a nacelle, a device (125) for fastening of a middle section of a nacelle and a device (126) for fastening a rear section of a nacelle.

2. The tooling (1) according to claim 1, wherein the hooking structure is configured to allow fastening of all the elements constituting a nacelle on the tooling (1), in a manner similar to the normal fastening of these elements on an aircraft.

3. The tooling (1) according to any of the preceding claims, comprising a first segment (121), intended to carry the rear section of a nacelle and a second segment (122), intended to carry the middle section and the air inlet of a nacelle, the second segment (122) being movable in translation with respect to the first segment (131), according to a direction parallel to the rotation axis of the hooking structure (12).

4. The tooling (1) according to any of the preceding claims, wherein the chassis is equipped with devices (114) allowing the displacement thereof, such as retractable rollers or air bags.

5. The tooling (1) according to any of the preceding claims, comprising a device for rotatably driving the hooking structure (12), such as an electric motor.

6. The tooling (1) according to any of the preceding claims, comprising a device, in particular an electrical device, allowing varying the height of the hooking structure (12).

7. An assembly of a nacelle (2) and a tooling (1) according to any of the preceding claims.

8. The assembly according to the preceding claim, wherein the nacelle (2) comprises a front section (210), a middle section (220) and a rear section (230).
